# FASCICULE DE BREVET EUROPEEN

(11) **EP 1 082 897 B1**
(45) Date de publication et mention de la délivrance du brevet: **25.03.2009**
(21) Numéro de dépôt: 00390013.1
(22) Date de dépôt: 07.09.2000
(51) Int. Cl.: A01K 5/02

(54) **Dispositif de distribution d'un produit pateux, ou semi-liquide ou liquide et installation le comportant**
Vorrichtung zum Ausgeben eines pastösen, flüssigen oder semi-flüssigen Produktes, und Anlage mit einer solchen Vorrichtung
Device for dispensing of a pasty, liquid or semi-liquid product and installation incorporating such a device

(30) Priorité: 07.09.1999 FR 9911180
(43) Date de publication de la demande: 14.03.2001
(73) Titulaire: Entreprise Individuelle Delbruel Eric, 12700 Capdenac-Gare (FR)
(72) Inventeur: Delbruel, Eric, 46100 Plagnioles (FR)
(74) Mandataire: Ravina, Bernard

(56) Documents cités:
- US-A- 3 233 864

## Description

La présente invention est relative à un dispositif de distribution produit se présentant sous un état pâteux ou semi-liquide ou bien liquide, comme une soupe pour le nourrissage d'un cheptel porcin et une installation de distribution de ce produit, équipée d'un ou plusieurs dispositifs selon l'invention.

Les soupes de nourrissage, constituées par un mélange d'eau, de farine de maïs de mélasse et autres, sont utilisées principalement pour le nourrissage des porcs en vue notamment de leur engraissement. Habituellement les porcs sont disposés par groupe dans des enclos appropriés aménagés dans un local d'élevage de part et d'autre d'une ou plusieurs allées de circulation. Typiquement chaque enclos est équipé d'une auge de forme allongée installée à même le sol ou sur des supports appropriés. Cette auge est alimentée périodiquement en soupe par un réseau de distribution, aérien, comprenant plusieurs circuits de distribution, agencés en boucle, constitués par des conduites horizontales aboutées les unes aux autres. À ce circuit sont raccordées plusieurs conduites de descente prévues chacune pour l'alimentation d'une ou plusieurs auges. L'installation de préparation de la soupe est équipée d'un groupe motopropulseur dont la fonction est de propulser la soupe dans le réseau de distribution en vue d'une distribution dosée dans chaque auge. Entre chaque conduite de descente et le circuit en boucle est installée une vanne comportant un pilote électrique ou électropneumatique commandé par une unité de contrôle et de commande installée à distance dans un local approprié. L'ajutage d'introduction de la vanne est aligné avec un perçage pratiqué dans la conduite correspondante du circuit de distribution. La fixation de la vanne sur cette conduite est opérée par deux brides en demi colliers, l'une de ses dernières étant fixée ou faisant partie du corps de vanne. Un jeu de boulons assure la fixation des brides l'une à l'autre et contre la conduite. La vanne dans d'autres installations est raccordée par un raccord en Té au circuit de distribution.

L'auge est positionnée par rapport à la conduite descente en sorte que sa zone centrale soit installée sous cette conduite. Habituellement la conduite de descente, dans sa zone inférieure, se divise en deux ramifications et forme un Y inversé. L'une de ces ramifications alimente la partie gauche de l'auge tandis que l'autre dirige la soupe vers la partie droite.

De telles installations se sont généralisées et sont utilisées depuis des années dans les locaux d'engraissement, dans les locaux d'élevage de truies gestantes, dans les locaux dits de maternité et dans les locaux d'élevage des nourrains.

Il est apparu à l'usage que de telles installations posent un certain nombre de problèmes.

En effet, l'exigence d'un engraissement uniforme de l'ensemble du cheptel suppose un dosage précis de la quantité de matières à distribuer dans les auges. S'il est relativement aisé de contrôler la dose au départ de l'installation de fabrication, il est plus difficile de contrôler la quantité déversée dans chaque auge compte tenu des pertes de charges. Pour cette raison, il est habituel de calibrer les orifices de passage du produit vers les vannes. Le diamètre de ces orifices dépend du taux de compressibilité du produit ; le produit est compressible en raison de la présence de bulles d'air emprisonnées dans les particules de farine et des autres produits secs entrant dans la composition de la soupe. Dans une moindre mesure, la valeur du diamètre de ce perçage calibré dépend du taux de dilatation des circuits de distribution et éventuellement de la valeur de la perte de charge en amont.

Quelle que soit la valeur du diamètre adoptée pour l'orifice calibré, cette valeur est relativement faible en regard du débit du produit. Pour cette raison, le jet de produit en sortie du perçage calibré est relativement puissant et vient frapper avec force le siège ainsi que l'obturateur de la vanne. Cet inconvénient conduit à plus ou moins brève échéance à la détérioration partielle ou totale de ces deux éléments. Par ailleurs on a observé aussi une usure prononcée de la bordure du perçage avec comme conséquence une augmentation de la section de passage et une perte de précision de la dose distribuée dans l'auge.

Un autre inconvénient des installations antérieures réside dans une trop faible vitesse d'écoulement du produit dans les différentes conduites et notamment dans les conduites de descente. Cette faible vitesse a pour conséquence de favoriser le dépôt du produit dans ces dernières et notamment dans la conduite de descente. Ces dépôts peuvent constituer à terme des milieux de cultures, propices aux développements microbiens bien souvent à l'origine des maladies porcines. Pour chasser les dépôts dans les circuits de distribution, il est connu de pulser une solution de lavage dans les conduites de ce dernier. Dans certain cas est introduit dans les conduites un bouchon de nettoyage propulsé dans ces dernières par la solution de nettoyage.

S'il est relativement aisé de nettoyer les circuits de distribution, il n'en va de même pour les conduites de descente. Le nettoyage de ces dernières suppose qu'elles puissent être facilement déposées ce qui est rarement le cas. Pour cette raison, les conduites de descente sont très rarement nettoyées et constituent des milieux d'accumulation du produit et de prolifération microbienne. Par ailleurs, les dépôts qui s'y forment réduisent la section de passage et la vitesse d'écoulement.

Une faible vitesse d'écoulement du produit a aussi des conséquences préjudiciables sur l'uniformité de l'engraissement des porcs. En effet, elle ne permet pas un étalement rapide et uniforme du produit dans l'auge et une quantité notable de soupe se trouve d'abord concentrée sous le point de chute du produit. Les zones extrêmes de l'auge ne reçoivent pas de suite le produit. En outre cette faible vitesse favorise grandement une sédimentation non uniforme de la farine et autres produits nourrissants. Ainsi on observe une couche sédimentaire plus importante dans la partie centrale de l'auge que dans les parties d'extrémité. La conséquence est que seuls les porcs les plus vigoureux c'est-à-dire les porcs dominants en se tenant au point de chute du produit, ont accès à la majeure part de la soupe. Les autres porcs, écartés par les plus vigoureux vers les extrémités de l'auge, n'ont qu'une alimentation clairsemée, peu équilibrée et moins riche en nutriments. Par ailleurs la forme terminale en Y de la conduite de descente favorise encore le dépôt de produit dans cette dernière. La variation de section en résultant est à l'origine d'une variation de débit d'une conduite de descente à l'autre de sorte que la soupe n'est pas distribuée uniformément dans les auges. Un autre inconvénient d'une faible vitesse résulte de la faible pression du produit en sortie des branches du Y. En raison de cette faible pression, les porcs avec leurs groins, peuvent obstruer les branches du Y. Ces différents inconvénients conduisent à la production de quelques porcs de poids importants, de quelques porcs de poids aux normes commerciales et de porcs de poids trop faibles dont l'engraissement devra être prolongé. Il en résulte systématiquement des pertes financières pour l'éleveur.

Il a été observé également que la fermeture de la vanne s'accompagne d'un effet de coup de bélier générateur d'une onde de choc qui se propage dans l'ensemble du réseau et conduit à brève échéance à la détérioration des raccords entre les différentes conduites. L'inventeur a mis en évidence que ce coup de bélier est la conséquence de la dépression qui se créée entre le produit et l'obturateur de la vanne lors de la fermeture de cette dernière. Généralement sont utilisées des vannes à membrane et des vannes à manchon. La vanne à membrane est dotée d'une membrane élastiquement déformable montée en tension dans une chambre dont elle constitue l'une des parois. Cette membrane est disposée en regard du siège de vanne. Pour obturer la siège et donc fermer la vanne, de l'air sous pression est introduit dans la chambre et repousse la membrane vers le siège.
La vanne à manchon comprend un manchon élastiquement déformable en compression et en expansion, monté coaxialement dans une chambre cylindrique du corps de vanne. Le canal interne que définit le manchon est traversé par le produit. Par injection d'air sous pression dans la chambre annulaire, le manchon se contracte sur lui-même ce qui à pour effet immédiat d'interrompre la circulation du produit. Quel que soit le type de vanne utilisé, il s'avère que la dépression créée consécutivement à la fermeture de la vanne, combinée avec la pression exercée par le produit en amont à un effet préjudiciable sur l'élément d'obturation, (membrane ou manchon) et conduit à la longue à sa détérioration. En effet, sous l'effet de cette dépression, l'élément d'obturation est sollicité vers l'orifice de sortie de la vanne et pour cette raison subit des forces d'étirement.

On connaît du brevet US 3 233864 un dispositif conforme au préambule de la première revendication.

La présente invention a pour objet de pallier les inconvénients cités.

À cet effet le dispositif selon l'invention, pour la distribution de produit pâteux ou semi liquide ou liquide telle une soupe pour le nourrissage des porcs et autre, interposé entre une conduite d'alimentation en produit et une conduite de descente, ledit dispositif comportant une vanne destinée à être fixée à une conduite d'alimentation et comportant un ajutage d'introduction du produit en relation avec un perçage radial de passage du produit pratiqué dans la conduite d'alimentation et un ajutage de distribution du produit en relation avec la conduite de descente. Ce dispositif comprend de plus une canule prolongeant de manière étanche l'ajutage de sortie du produit de la vanne et un élément tubulaire disposé autour de la canule, d'un diamètre interne supérieur au diamètre externe de la canule de façon à ménager autour de la canule un intervalle annulaire, ledit élément tubulaire étant raccordé à la conduite de descente et étant pourvu d'une prise d'air apte à engendrer un effet venturi.

Ce dispositif tel que défini, se caractérise essentiellement en ce que l'élément tubulaire est fixé de manière étanche au corps de vanne et que la prise d'air est constituée par au moins un perçage radial traversant pratiqué dans la paroi de l'élément tubulaire, en arrière de la bouche de sortie de la canule.

Grâce à ce dispositif, il n'est plus besoin de calibrer le perçage formé dans la conduite de distribution puisque le calibrage est opéré dans la canule. Ce perçage peut donc être d'un diamètre important pour réduire à néant la violence jet. De cette façon, tout risque de détérioration du siège de la vanne sous l'effet de la pression de ce jet se trouve écarté. En outre en raison de la présence de cette prise d'air, aucune dépression ne se forme entre le produit et l'obturateur de la vanne lors de la fermeture de cette dernière. Ainsi sont supprimés les coups de bélier lors de la fermeture de la vanne. De plus la prise d'air formée engendre un effet Venturi grâce auquel de l'air se trouve aspiré dans la conduite de descente. Il a été démontré que l'air aspiré, se mélange intimement au produit liquide et assure un foisonnement important de ce dernier. On obtient ainsi en quantité volumique de 50 à 70 % d'air dans le mélange formé. De cette aspiration et foisonnement, il en résulte une augmentation conséquente de la vitesse d'écoulement du produit dans cette conduite, on réduit ainsi le risque de dépôt de produit dans cette dernière. Ce foisonnement conduit à une fluidification plus importante du produit liquide. Cet effet à lui seul ou combiné à une plus grande vitesse d'écoulement du produit liquide dans la conduite de descente, facilite grandement l'étalement du produit dans l'auge et diminue le temps de remplissage de cette dernière. En outre la sédimentation des éléments solides du produit ou soupe, n'est plus localisée dans la zone centrale de l'auge, mais est uniformément répartie le long de cette dernière. Par ailleurs en adoptant une vitesse d'écoulement élevée on obtient une pression plus importante en sortie du Y. Les porcs ne peuvent plus par leurs groins, obturer les branches du Y.

Grâce à ces dispositions on obtient un nourrissage uniforme du cheptel et donc moins de pertes.

De surcroît cette prise d'air peut être utilisée pour l'introduction dans la conduite de descente d'une solution de nettoyage. On résout ainsi le problème du nettoyage des conduites de descente.

D'autres avantages et caractéristiques de l'invention apparaîtront à la lecture de la description d'une forme préférée de réalisation donnée à titre d'exemple non limitatif en se référant aux dessins annexés en lesquels :
- la figure 1 est une vue schématique d'une installation équipée d'un dispositif selon l'invention,
- la figure 2 est une vue en coupe longitudinale d'un dispositif selon l'invention selon une première forme de réalisation, [
- la figure 3 est une vue en coupe selon la ligne AA de la figure 2,
- la figure 4 est une vue en coupe longitudinale d'un dispositif selon une deuxième forme de réalisation.
- la figure 5 est une vue en coupe longitudinale d'un dispositif selon une troisième forme de réalisation.

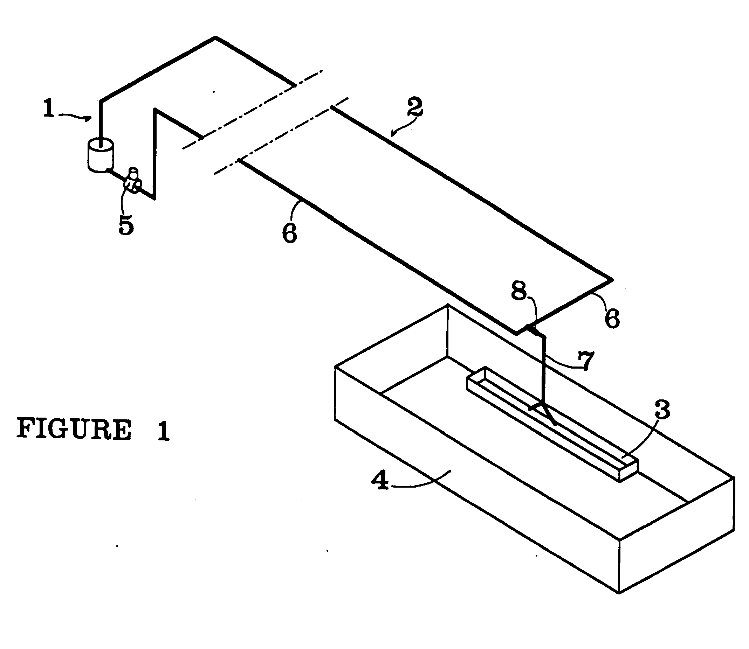

En figure 1 est représentée une installation selon l'invention pour la distribution d'un produit pâteux, ou liquide, ou semi-liquide telle une soupe pour le nourrissage des porcs. Cette installation comprend une unité de fabrication 1 de soupe à partir d'eau, de farine de maïs, de mélasse et autres produits et un réseau aérien 2 de distribution de cette soupe dans des auges 3 installées dans des enclos de nourrissage 4 établis dans un local d'élevage.

La soupe réalisée, est stockée dans une cuve en vue de sa distribution dans le réseau 2. À cette cuve est associée une pompe 5 dont le rôle est de puiser par sa pipe d'aspiration la soupe dans la cuve et de refouler la soupe, par sa pipe de refoulement, dans les conduites que possède ce réseau 2.

Typiquement, le réseau 2 est constitué par un ou plusieurs circuits d'alimentation, en boucle, réalisés par aboutement de conduites 6 installées en hauteur. Par une disposition en boucle, il faut entendre que ce circuit par une de ses extrémités est raccordé à la pipe de refoulement de la pompe et par son autre extrémité à la cuve.

En sortie de pompe, l'installation est équipée d'un filtre d'un type connu. Ce filtre est prévu pour retenir les impuretés d'une taille supérieure à la maille du filtre ainsi que les agglomérats de produits. On écarte ainsi tout risque d'obturation des conduites, ou des dispositifs par ces éléments.

Les circuits d'alimentation alimentent chacun une ou plusieurs conduites de descente 7, chaque conduite de descente étant installée au droit d'une auge 3, préférentiellement en regard de la zone centrale de cette dernière. Chaque conduite de descente peut présenter un segment de conduite amont horizontal de faible longueur et un segment aval vertical. Ces deux segments sont réunis par un coude à angle droit. La conduite de descente pourra être formée d'un seul segment vertical.

Au niveau de la jonction entre chaque conduite de descente 7 plus précisément du segment amont et la conduite d'alimentation correspondante du circuit d'alimentation en boucle, est disposé un dispositif de distribution selon l'invention.

Ce dispositif comporte une vanne 9 du type à membrane, à manchon, à boisseau ou autre commandée à distance par une unité de contrôle et de commande installée dans un local approprié.

La vanne 9 est pourvue d'un ajutage d'introduction du produit et d'un ajutage de sortie. Par l'ajutage d'introduction du produit, la vanne est positionnée en regard d'un perçage traversant, pratiqué dans la conduite d'alimentation 7 et est fixée à cette conduite par tous moyens connus.

Selon une forme préférée de réalisation, la vanne comporte une bride sous forme de demi-collier, destinée à être fixée par boulons à un second demi-collier disposé autour de la conduite. Par serrage des écrous des boulons, les demi-colliers sont fermement maintenus contre la conduite d'alimentation et la vanne par son ajutage d'introduction parfaitement immobilisée en regard du perçage traversant de la conduite. Il y a lieu de noter que la valeur du diamètre de ce perçage sera supérieure à celle du diamètre de l'ajutage d'introduction pour éviter toute perte de charge à ce niveau. Selon une autre forme de réalisation, la vanne est raccordée à la conduite d'alimentation par un raccord en Té.

Le dispositif, outre la vanne 9, comprend une canule 10 horizontale, de section interne calibrée de forme cylindrique ou autre, prolongeant de manière étanche l'ajutage de sortie et un élément tubulaire 11, horizontal, engagé coaxialement autour de la canule 10 et délimitant avec cette dernière un intervalle annulaire. Cet élément tubulaire 11 est raccordé de manière étanche d'une part au corps de vanne et d'autre part au segment horizontal de la conduite de descente par l'intermédiaire d'un manchon ou bien, cas ou la conduite de descente ne comporte que seul segment vertical, audit segment par l'intermédiaire d'un coude à angle droit.

La section droite externe de la canule est plus petite que la section interne de la conduite de descente. La canule s'enfonce de quelques centimètres dans l'élément tubulaire.
On comprend que le produit en sortie de vanne passe dans la canule, se déverse d'abord dans l'élément tubulaire et ensuite dans la conduite de descente.

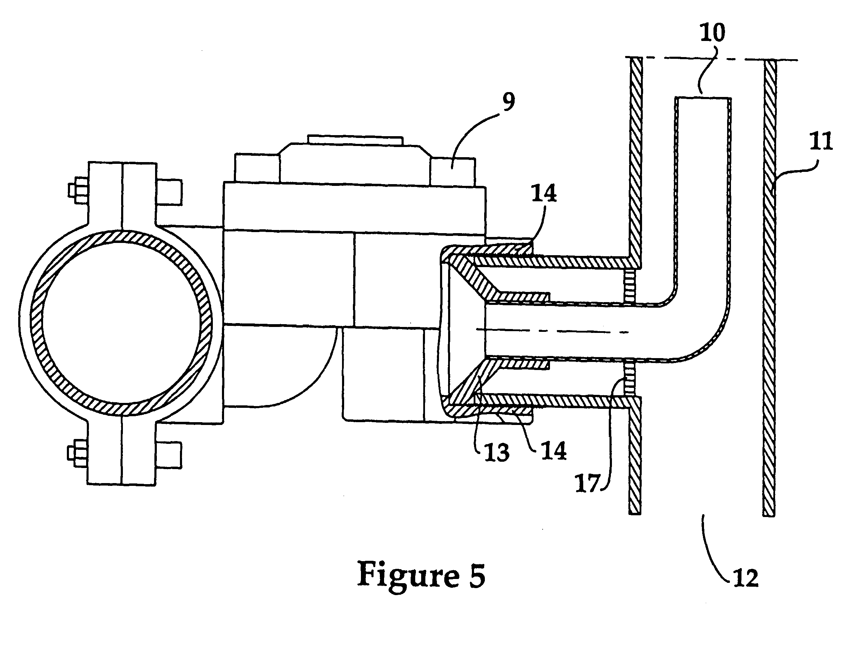

Préférentiellement la canule et l'élément tubulaire sont rectilignes mais en variante, comme on peut le voir en figure 5, la canule et l'élément tubulaire sont coudés. Selon cette forme de réalisation, l'élément tubulaire peut être formé par la branche basale et l'une des branches latérales d'un raccord en Té, la prise d'air étant formée dans ce cas par l'ouverture présente en extrémité libre de l'autre branche latérale.

Toujours selon la forme préférée de réalisation, la section droite interne de la canule est constante, mais en variante l'extrémité libre de la canule pourra présenter une section droite interne décroissante.

De préférence la section droite interne de la canule ainsi que la section droite interne du tube sont circulaires. En variante, la canule peut présenter une section droite interne polygonale, par exemple carrée.

La canule peut être dotée de moyen pour forcer la rotation du produit. Dans ce but, si elle est constituée par un tube cylindrique elle peut être dotée de stries internes en hélice. Dans le cas où elle est constituée par un tube de section polygonale elle sera vrillée.

La longueur de la canule et donc son degré d'enfoncement dans l'élément tubulaire pourra être fonction de la perte de charge amont.

En arrière de la bouche de sortie de la canule, ou au niveau de cette dernière, en considérant le sens d'écoulement du produit est formée dans l'élément tubulaire une prise d'air 12 assurant la communication entre l'atmosphère et l'intervalle annulaire. Grâce à cette prise d'air, les risques de coups de béliers créés par la dépression résultant de la fermeture de la vanne et formés dans la conduite de descente seront écartés.

De surcroît, en raison de cette prise d'air est engendré un effet Venturi. Ainsi lors de la distribution du produit, de l'air se trouve aspiré dans la conduite et dans la soupe et se mélange intiment à cette dernière. On obtient ainsi un foisonnement important et une fluidité accrue.

Outre le fait d'augmenter la vitesse d'écoulement ce flux d'air réalise un brassage du produit dans la conduite. On obtient ainsi une meilleure homogénéité.

L'augmentation conséquence de vitesse du produit dans la conduite de descente 7 et du brassage résultant de l'aspiration d'un flux d'air s'oppose à l'encrassage de cette dernière. Le danger résultant de la fermentation des résidus de soupe est ainsi fortement minimisé. Par ailleurs l'ouverture inférieure de la conduite et l'ouverture supérieure que constitue la prise d'air permettent, en période de non-distribution du produit, la circulation d'un courant d'air dans la conduite, cette circulation d'air s'opposant au développement microbien anaérobie dans la conduite.

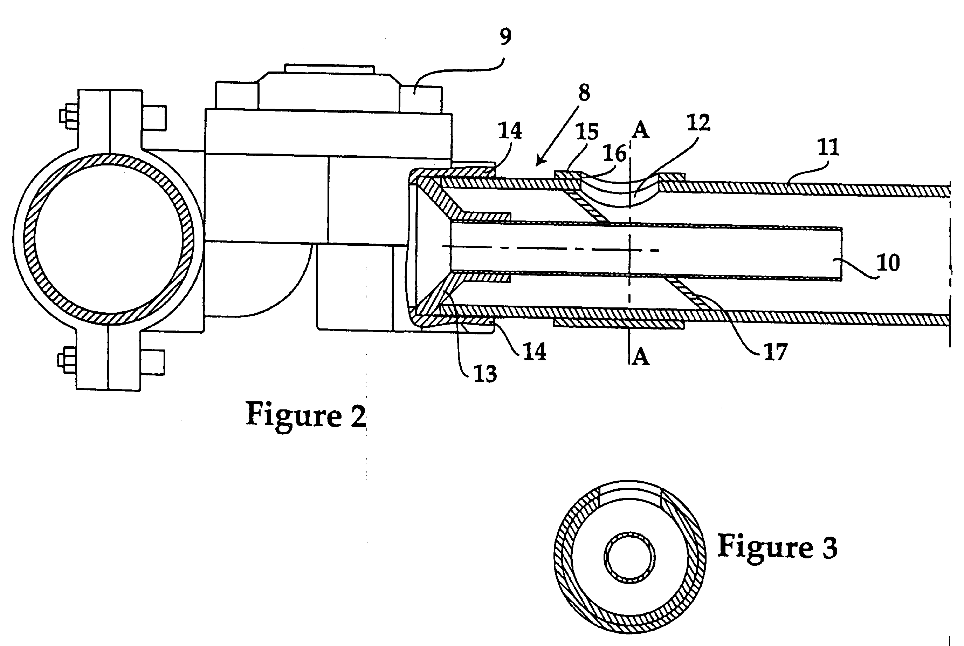

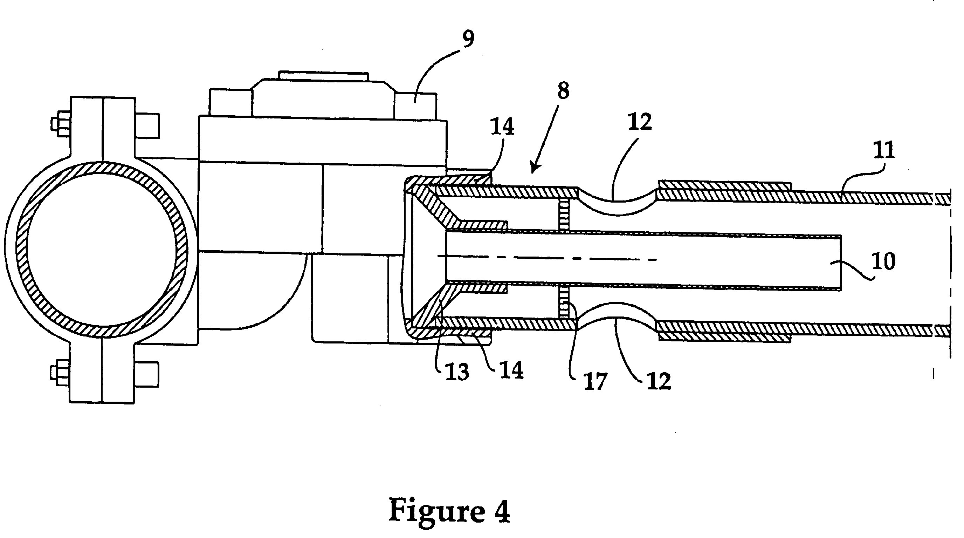

Dans la forme de réalisation présentée sur les figures 2 et 4, la canule 10 est raccordée à l'ajutage de sortie de la vanne 9 par un raccord tronconique 13 dont le but est d'assurer une variation progressive de section entre celle de l'ajutage et sortie de la vanne et celle du canal interne que délimite la canule. Comme on peut le voir sur ces figures cet ajutage de sortie est prolongé par une tubulure 14. Dans cet exemple de réalisation, le raccord tronconique 13 est engagé sans jeu dans cette tubulure et vient en appui contre un épaulement formé dans cette dernière autour de l'ajutage de sortie. Toujours dans cet exemple de réalisation, l'élément tubulaire 11 est engagé sans jeu dans la tubulure 14 et y est fixé par collage vissage ou autre. Une fixation par vissage présente l'avantage d'être démontable.
Comme on peut le voir, cet élément tubulaire par son extrémité vient en appui contre le raccord tronconique 13 et le maintien en appui contre l'épaulement formé autour de l'ajutage de sortie. Dans la forme préférée de réalisation, la prise d'air est constituée par au moins un perçage traversant radial.

Pour le dispositif représenté en figure 2, la prise d'air est formée d'un seul perçage traversant tandis que pour le dispositif objet de la figure 4, la prise d'air est formée par deux perçages traversants diamétralement opposés.
IL va de soi que la présente invention n'est pas limitée à la présence d'un ou deux perçages mais que trois perçages ou plus pourront être formés dans l'élément tubulaire, ces perçages seront par ailleurs régulièrement répartis.

La prise d'air est préférentiellement formée quelques centimètres en arrière de la bouche de sortie de la canule 10 mais cette prise d'air peut être formée au niveau de l'embouchure de sortie de produit que comporte la canule.

Le jet de produit liquide en sortie de canule s'éclate rapidement et se disperse ce qui favorise grandement le mélange du produit avec l'air aspiré. Pour faciliter cette dispersion et cet éclatement, l'élément tubulaire, en aval de la canule présentera un épanouissement conique s'élargissement de préférence progressivement en direction de la zone aval de la conduite. Radialement à cet épanouissement et à l'élément tubulaire, ledit l'élément tubulaire pourra comporter un ou plusieurs perçages traversants réalisant chacun un Venturi. L'embouchure de ces perçages sur la face externe de l'élément tubulaire pourront, le cas échéant être obturés par un manchon monté en coulissement sur l'élément tubulaire.

La section terminale de sortie de la canule peut être de forme circulaire ou polygonale ou cruciforme. Une section cruciforme, qui peut être obtenue par déformation radiale de la canule vers l'intérieur, selon deux diamètres orthogonaux permet un meilleur éclatement du jet en sortie et une meilleure dispersion. Toute autre forme adaptée pourra être envisagée.

Pour pouvoir obturer totalement la prise d'air, en vue par exemple de son remplissage total par une solution de lavage ou bien partiellement en vue de régler le débit d'air entrant dans l'élément tubulaire, est prévu un élément mobile d'obturation 15. Cet élément d'obturation peut occuper une position initiale, selon laquelle la prise d'air est totalement dégagée, une position finale, selon laquelle la prise d'air est totalement obturée et des positions intermédiaires d'obturation partielle de la prise d'air.

Préférentiellement l'élément d'obturation est constitué par un manchon monté coulissant autour de l'élément tubulaire 11. Selon la forme de réalisation objet de la figure 2, le manchon 15 est monté rotatif sur l'élément tubulaire et est doté d'au moins un perçage traversant 16 venant en position de dégagement de la prise d'air 12, en correspondance avec le ou les perçages constituant cette dernière.

Selon une autre forme de réalisation, le manchon est monté de manière à pouvoir se déplacer en translation sur l'élément tubulaire.

Pour éviter l'introduction de poussières insectes et autres dans la soupe, la prise d'air comporte un filtre amovible.

Il y a lieu de noter que par la prise d'air et grâce à l'effet d'aspiration créé, il est maintenant possible d'introduire dans la soupe un additif médicamenteux ou autre produit en vue d'un traitement sélectif.

Pour éviter tout dépôt de soupe dans l'élément tubulaire 11 est prévue une paroi d'obturation 17 entre la canule 10 et l'élément tubulaire 11, cette paroi étant disposée en arrière de la prise d'air 12. Cette paroi peut être disposée de manière oblique par rapport à l'axe longitudinal de la canule.

La conduite de descente 7 en partie inférieure forme deux ramifications 18 inclinées à la manière des branches d'un V inversé. Le diamètre interne de chaque ramification est inférieur au diamètre de la conduite de descente. De préférence chaque ramification sera inclinée par rapport à la partie supérieure de la conduite d'un angle compris entre 90 degrés et 120 degrés, la valeur angulaire choisie dépendant de la longueur de l'auge. À titre d'exemple, la longueur de chaque ramification sera supérieure à quinze centimètres. Ces ramifications pourront être rectilignes ou bien cintrées.

Ces ramifications ont pour but, de déverser les produits simultanément dans la partie gauche et la partie droite de l'auge pour un remplissage plus rapide et uniforme.

Ces ramifications pourront présenter une section droite interne de forme polygonale pour éviter des tourbillons en sortie.

On a précédemment décrit une installation comportant des circuits de distribution en boucle, mais il va de soit que le dispositif selon la présente invention peut être utilisé aussi avec des circuits en épi. De même le dispositif selon l'invention peut être utilisé avec des installations dont les circuits de distribution sont enterrés ou disposés prés du sol. Cette installation ne possède pas de conduites de descente mais des conduites d'alimentation des auges. Ces conduites seront raccordées au circuit d'alimentation, par des dispositifs selon l'invention.

De plus on pourra prévoir que chaque conduite ou certaines d'entre-elles seulement soient alimentées par plusieurs dispositifs selon l'invention connectés à des circuits de distribution distincts aptes à délivrer des soupes de nourrissage de caractéristiques différentes. Grâce à l'effet de brassage qui se produira en amont des canules, dans la conduite de descente, sera obtenu un mélange intime des différentes soupes.

À titre d'exemple purement indicatif, la vitesse d'écoulement de la soupe en sortie de la canule est comprise environ entre 15 m/s de 35 m/s pour une section de sortie présentant un diamètre de 12 mm. Le diamètre interne de l'élément tubulaire est de l'ordre de 40 mm ; l'épaisseur de la paroi de la canule étant de l'ordre de 2 mm.

Il va de soi que la présente invention peut recevoir tous aménagements et variantes du domaine des équivalents techniques.

## Revendications

1. Dispositif (8) pour la distribution de produits pâteux ou semi-liquide ou liquide telle une soupe, pour l'engraissement des porcs, interposé entre une conduite d'alimentation (6) en produit et une conduite verticale de descente, ledit dispositif comportant une vanne (9) destinée à être fixée à la conduite d'alimentation et comportant un ajutage d'introduction du produit en relation avec un perçage radial de passage du produit pratiqué dans la conduite d'alimentation (6) et un ajutage de distribution du produit en relation avec la conduite verticale, ledit dispositif comportant de plus une canule (10) prolongeant de manière étanche l'ajutage de sortie de la vanne (9) et un élément tubulaire (11) disposé autour de la canule, d'un diamètre interne supérieur au diamètre externe de la canule de façon à ménager autour de la canule un intervalle annulaire, ledit élément tubulaire étant raccordé à la conduite de descente (7) et étant pourvu d'une prise d'air (12) apte à engendrer un effet venturi, **caractérisé en ce que** l'élément tubulaire (11) est fixé de manière étanche au corps de vanne et que la prise d'air (12) est constituée par au moins un perçage radial traversant pratiqué dans la paroi de élément tubulaire (11), en arrière de la bouche de sortie de la canule (10).

2. Dispositif selon la revendication 1, **caractérisé par** une paroi d'obturation (17) disposée entre la canule (10) et élément tubulaire (11) et en arrière de la prise d'air.

3. Dispositif selon la revendication l'une quelconque des revendications précédentes, **caractérisé par** un élément d'obturation, mobile (15) de la prise d'air (12)

4. Dispositif selon la revendication 3, **caractérisé en ce que** l'élément d'obturation (15) est constitué par un manchon monté en coulissement autour de l'élément tubulaire (11).

5. Dispositif selon la revendication 4, **caractérisé en ce que** le manchon 15 est monté rotatif sur l'élément tubulaire et qu'il est doté d'au moins un perçage traversant (16) venant en position de dégagement de la prise d'air (12), en correspondance avec le ou les perçages constituant cette dernière.

6. Dispositif selon la revendication 4, **caractérisé en ce que** le manchon est monté de manière à pouvoir se déplacer en translation sur l'élément tubulaire.

7. Installation pour la distribution de produits pâteux, ou semi-liquides, ou liquides, par exemple de la soupe pour le nourrissage des parcs et autres animaux comprenant au moins une conduite (6) d'alimentation en produit et au moins une conduite verticale de descente (7) de distribution du produit dans une auge (3), **caractérisée en ce qu'**elle est équipée entre la conduite d'alimentation (6) et la conduite de descente (7) d'un dispositif (8) selon l'une quelconque des revendications 1 à 6.

8. Installation selon la revendication 7, **caractérisée en ce que** la conduite de descente (7) en partie inférieure forme deux ramifications (18) inclinées, le diamètre interne de ces deux ramifications étant inférieur au diamètre interne de la conduite de descente (7).

## Claims

1. A device (8) for dispensing viscous or semi-liquid or liquid substances such as a soup, for fattening pigs, interposed between a substance supply pipe (6) and a vertical downpipe, said device comprising a valve (9) arranged to be fixed to the supply pipe and comprising a nozzle for introducing the substance in relation to a radial piercing for passage of the substance formed in the supply pipe (6) and a nozzle for dispensing the substance connected to the vertical pipe, said device also comprising a cannula (10) sealingly extending the outlet nozzle of the valve (9) and a tubular element (11) disposed around the cannula, with an inside diameter greater than the outside diameter of the cannula so as to form an annular gap around the cannula, said tubular element being connected to the downpipe (7) and being provided with a breather (12) able to generate a venturi effect, **characterised in that** the tubular element (11) is sealingly fixed to the valve body and **in that** the breather (12) is formed by at least one through radial piercing formed in the wall of the tubular element (11), behind the outlet opening of the cannula (10).

2. A device according to claim 1, **characterised by** an obturation wall (17) disposed between the cannula (10) and the tubular element (11) and behind the breather.

3. A device according to any one of the preceding claims, **characterised by** a movable obturation element (15) for the breather (12).

4. A device according to claim 3, **characterised in that** the obturation element (15) is formed by a sleeve slidably mounted around the tubular element (11).

5. A device according to claim 4, **characterised in that** the sleeve (15) is mounted so as to rotate on the tubular element and **in that** it is provided with at least one through piercing (16) coming into the position of leaving the breather (12) clear, coinciding with the piercing or piercings constituting the latter.

6. A device according to claim 4, **characterised in that** the sleeve is mounted so as to be able to move in translation on the tubular element.

7. An installation for dispensing viscous or semi-liquid or liquid substances, for example soup for feeding pigs and other animals, comprising at least one substance supply pipe (6) and at least one vertical downpipe (7) for dispensing the substance into a trough (3), **characterised in that** it is equipped between the supply pipe (6) and the downpipe (7) with a device (8) according to any one of claims 1 to 6.

8. An installation according to claim 7, **characterised in that** the downpipe (7) at the bottom part forms two inclined branches (18), the inside diameter of the two branches being less than the inside diameter of the downpipe (7).

## Patentansprüche

1. Vorrichtung (8) zum Verteilen von pastösen oder semi-flüssigen oder flüssigen Produkten, wie einer Suppe, zum Mästen von Schweinen, die zwischen einer Zuführleitung (6) des Produkts und einer vertikalen Fallleitung eingefügt ist, wobei die Vorrichtung ein Ventil (9) aufweist, das zur Befestigung an der Zuführleitung bestimmt ist und eine Düse zum Einbringen des Produkts bezüglich einer Radialbohrung, die in die Zuführleitung (6) zum Fördern des Produktes eingebracht ist, sowie eine Düse zum Verteilen des Produktes bezüglich der vertikalen Fallleitung aufweist, wobei die Vorrichtung außerdem eine Kanüle (10) umfasst, welche die Auslassdüse des Ventils (9) dicht verlängert, sowie ein um die Kanüle herum angeordnetes Rohrelement (11) eines Innendurchmessers größer als der Außendurchmesser der Kanüle derart, dass ein Ringspalt um die Kanüle gebildet ist, wobei das Rohrelement an die Fallleitung (7) angeschlossen und mit einer Luftzufuhr (12) versehen ist, welche einen Venturieffekt bewirken kann, **dadurch gekennzeichnet, dass** das Rohrelement (11) dicht am Gehäuse des Ventils fixiert ist und dass die Luftzufuhr (12) von mindestens einer die Wand des Rohrelementes (11) hinter der Auslassmündung der Kanüle (10) durchsetzenden Radialbohrung gebildet ist.

2. Vorrichtung nach Anspruch 1, **dadurch gekennzeichnet, dass** eine Trennwand (17) zwischen der Kanüle (10) und dem Rohrelement (11) hinter der Luftzufuhr angeordnet ist.

3. Vorrichtung nach einem der vorangehenden Ansprüche, **gekennzeichnet durch** ein mobiles Absperrelement (15) der Luftzufuhr (12).

4. Vorrichtung nach Anspruch 3, **dadurch gekennzeichnet, dass** das Absperrelement (15) von einer gleitend um das Rohrelement (11) angeordneten Manschette gebildet ist.

5. Vorrichtung nach Anspruch 4, **dadurch gekennzeichnet, dass** die Manschette (15) drehbar auf dem Rohrelement angeordnet und mit mindestens einer Querbohrung (16) versehen ist, die bezüglich der oder den die Luftzufuhr bildenden Bohrung(en) (12) in Absperrstellung bringbar ist.

6. Vorrichtung nach Anspruch 4, **dadurch gekennzeichnet, dass** die Manschette derart montiert ist, dass sie sich translatorisch bezüglich des Rohrelementes verlagern kann.

7. Einrichtung zum Verteilen von pastösen oder semi-flüssigen oder flüssigen Produkten, wie einer Suppe , zum Mästen von Schweinen und anderen Tieren, die mindestens eine Zuführleitung (6) des Produktes und mindestens eine vertikale Fallleitung (7) zur Verteilung des Produktes in einen Trog (3) umfasst, **dadurch gekennzeichnet, dass** sie zwischen der Zuführleitung (6) und der Fallleitung (7) eine Vorrichtung (8) nach einem der Ansprüche 1 bis 6 aufweist.

8. Einrichtung nach Anspruch 7, **dadurch gekennzeichnet, dass** die Fallleitung (7) in ihrer unteren Partie zwei geneigte Zweige (18) bildet, deren Innendurchmesser kleiner als der Innendurchmesser der Fallleitung (7) ist.
